# EUROPEAN PATENT SPECIFICATION

(11) **EP 3 492 845 B1**
(45) Date of publication and mention of the grant of the patent: **07.06.2023**
(21) Application number: 18208282.6
(22) Date of filing: 26.11.2018
(51) Int. Cl.: F25B 39/04, F28D 1/04

(54) **MULTI-TEMPERATURE TRANSPORTATION REFRIGERATION SYSTEM**
TRANSPORTKÜHLSYSTEM MIT MEHREREN TEMPERATUREN
SYSTÈME DE RÉFRIGÉRATION DE TRANSPORT MULTITEMPÉRATURE

(30) Priority: 01.12.2017 US 201762593294 P
(43) Date of publication of application: 05.06.2019
(73) Proprietor: Carrier Corporation, Palm Beach Gardens, FL 33418 (US)
(72) Inventor: Sun, Jian, East Syracuse, NY 13057 (US); Qiu, Xinliang, East Syracuse, NY 13057 (US); Zhou, Jianhua, East Syracuse, NY 13057 (US)
(74) Representative: Schmitt-Nilson Schraud Waibel Wohlfrom Patentanwälte Partnerschaft mbB

(56) References cited:
- EP-A1- 1 512 565
- EP-A2- 2 868 999
- WO-A1-2008/061362
- WO-A1-2014/032654
- WO-A1-2016/129862
- WO-A1-2016/173790
- US-A1- 2005 279 127

## Description

### BACKGROUND

This application relates to a multi-temperature transportation refrigeration system which cools two distinct environments to different temperatures and utilizes a common condenser.

Refrigeration systems are known. Generally, a compressor compresses a refrigerant and delivers it into a condenser. The refrigerant is cooled and passes through an expansion valve. The refrigerant is expanded and passes through an evaporator. The evaporator cools air to be delivered into an environment to be conditioned.

One application for such refrigeration systems is in a transportation refrigeration system. As an example, a truck may have a refrigerated trailer. It is known to provide distinct temperatures at distinct compartments within a common trailer. Individual refrigeration circuits are often utilized to provide the distinct temperatures.

WO 2016/129862 A1 shows a refrigerator including a first compressor for compressing refrigerant, a first condenser for condensing refrigerant compressed by the first compressor, a first expansion valve for lowering temperature and pressure of refrigerant condensed by the first condenser, a first evaporator for evaporating refrigerant passed through the first expansion valve, a second compressor for compressing refrigerant, a second condenser for condensing refrigerant compressed by the second compressor, a second expansion valve for lowering temperature and pressure of refrigerant condensed by the second condenser, and a second evaporator for evaporating refrigerant passed through the second expansion valve. The first condenser and second condenser include refrigerant tubes arranged to hold cooling fins in common, thereby forming a common-fin-held condenser.

EP 2 868 999 A2 shows a refrigeration cycle of a refrigerator including a first refrigeration cycle in which a first refrigerant flows along a first refrigerant tube and a second refrigeration cycle in which a second refrigerant flows along a second refrigerant tube including first and second compressors compressing each of the first and second refrigerants into a high-temperature high pressure gaseous refrigerant, auxiliary request and a combined condenser condensing each of the first and second refrigerants passing through the first and second compressors into a high-temperature high pressure liquid refrigerant.

EP 1 512 565 A1 shows a refrigeration trailer according to the preamble of claim 1.

### SUMMARY

In a featured embodiment, a refrigeration trailer according to claim 1 is provided.

The invention may be best understood from the following drawings and specification.

### BRIEF DESCRIPTION OF THE DRAWINGS

Figure 1 schematically shows a refrigeration transportation system.
Figure 2A shows a first example condenser that may be utilized in the Figure 1 environment.
Figure 2B shows an embodiment condenser.
Figure 2C shows a second example condenser.
Figure 2D shows another embodiment condenser.

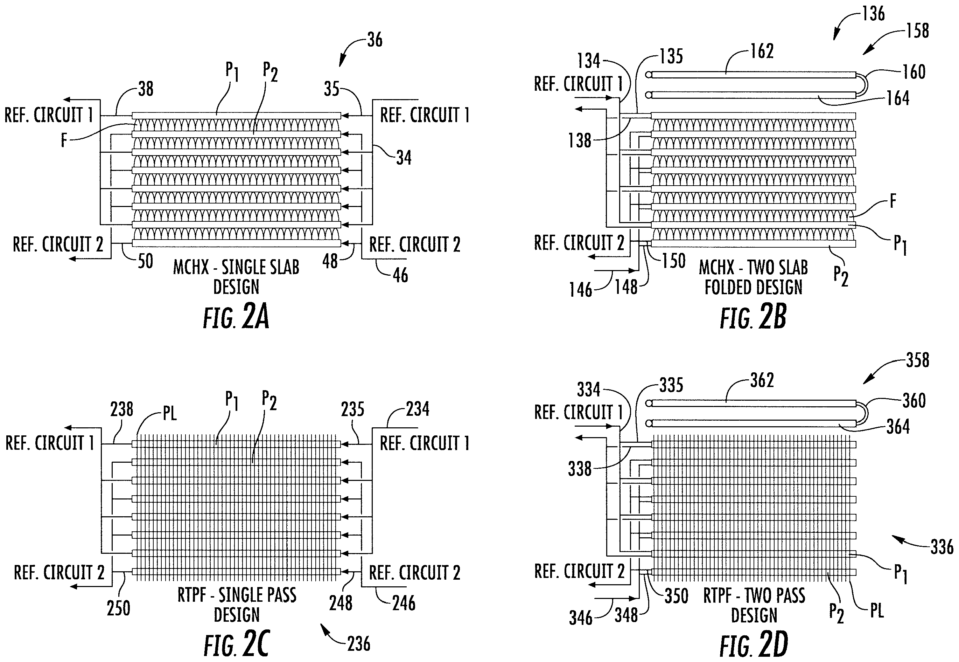

The example condensers shown in Figure 2A and 2C do not fall under the scope of the claims.

### DETAILED DESCRIPTION

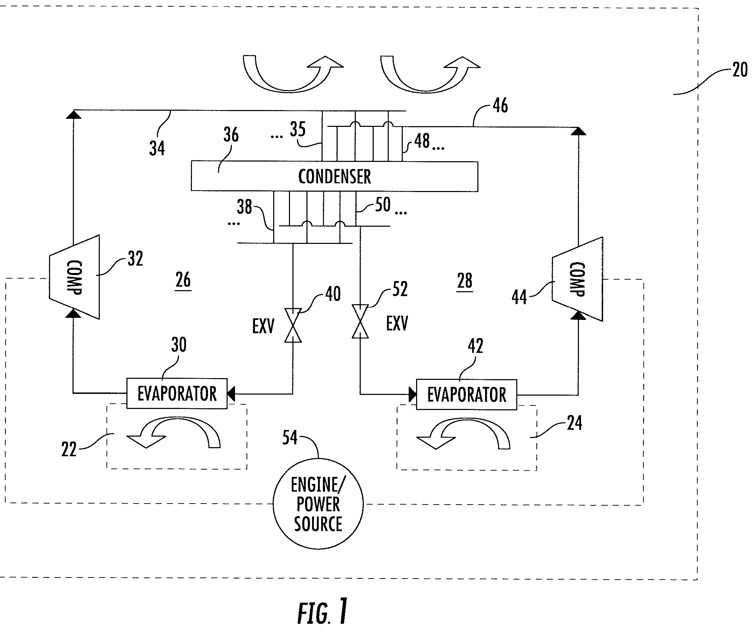

A refrigerated enclosure 20 is illustrated in Figure 1. As known, the enclosure may be a refrigerated trailer associated with a truck. However, other auxiliary request applications for refrigerated enclosures may benefit from this disclosure. For purposes of this application, the term "enclosure" should extend to all enclosures, such as trailers, shipboard containers, etc.

Two distinct compartments 22 and 24 are illustrated. These two compartments are desirably cooled to distinct temperatures. As an example, one may be cooled to a lower temperature than the other. One may desirably maintain items stored within the compartment at a temperature below freezing, while the other may be at a higher, but still cooled, temperature.

The refrigeration circuit 26 is provided to maintain the compartment 22 at its temperature. A refrigeration circuit 28 is provided to maintain the compartment 24 at its temperature.

Refrigeration circuit 26 includes an evaporator 30. As known, a fan pulls air across the evaporator 30 to cool the air to the desired temperature for the compartment 22.

Downstream of the evaporator 30, the refrigerant passes to a first compressor 32 and then into a line 34 leading to inlets 35 into a condenser 36. Outlet lines 38 for the first circuit pass through an expansion valve 40 and back to the evaporator 30.

The circuit 28 includes an evaporator 42. Again, a fan will pull air across the evaporator 42 to cool it to the desired temperature for the compartment 24.

Downstream of the evaporator 42, the refrigerant passes to a second compressor 44 and then to a line 46 leading to inlet lines 48 into the condenser 36. Outlet lines 50 pass through an expansion valve 52 and back to the evaporator 42.

An engine or other power source 54 is shown to power both compressors 32 and 44.

As shown in this Figure, the inlet lines 35 and 48 are staggered. That is, they are interspersed in a direction perpendicular to a flow direction through the condenser 36. Notably, Figure 1 is a schematic view and the flow direction may actually be across the larger dimension of the condenser 36 (in this Figure between the left and right). auxiliary request

Figure 2A shows a first example 36 of the condenser. Figure 2A may be a multi-louver flat-tube heat exchanger (alternatively referred to as "microchannel heat exchanger"). As known, microchannel heat exchangers have a plurality of channels spaced into the plane of this Figure and which provide very efficient heat transfer. The line 34 leads to a plurality of inlets 35 and passes to outlets 38 at an opposed end of the heat exchanger 36. Similarly, the line 46 leads to inlets 48 and outlets 50. As can be appreciated, the inlets 35 and 48 of the two circuits are staggered or interspersed in a direction perpendicular to a flow direction across the heat exchanger 36. The same is true of the outlets 38 and 50.

Multi-louver fins F assist in cooling the refrigerant in the heat exchanger, which are brazed to the flat tube.

Figure 2B shows an embodiment 136, which is also a microchannel heat exchanger but with two-slab arrangement. The two circuits 134 and 146 enter into the heat exchanger on a first end and the outlets 138 and 150 are also at the first end. The actual structure of the channels across the heat exchanger may be as shown at 158. The first slab 162 passes across the dimension of the heat exchanger, reaches a turning elbow (which can be a folded unfinned flat tube) 160 and return back through the second slab 164 to the outlet. Although Fig. 2B only shows a 2-slab configuration, multi-slab (more than 3 slabs) configurations also belong to this scope of this invention.

Figure 2C shows an example 236. This example may be a round tubes plate fin (P_{L}) heat exchanger. The inlet circuits 234 and 246 enter on one end to the circuits 235 and 248. The refrigerant passes across the heat exchanger to the outlets 238 and 250.

Figure 2D shows another embodiment 336, which may be also a round tube plate fin heat exchanger. Here, the inlet circuits 334 and 346 enter at one end to inlets 335 and 348. The outlets 338 and 350 are at the same end.

Again, a tube structure 358 is utilized. The inlets pass into a tube 362 to a turning elbow 360, which may be a hairpin bend, and back to an outlet tube 364.

auxiliary request

In each of the Figures 2A-D, first flow passages P₁ connect the first circuit inlets to first circuit outlets, and second flow passages P₂ connect the second circuit inlets to second circuit outlets.

While the embodiments in Figures 2A-2D are specifically disclosed as a condenser, a worker of ordinary skill in the art would recognize that other applications for the heat exchanger may benefit from this disclosure. As an example, the heat exchanger may be utilized in an evaporator, an economizer, etc. Generally, any refrigeration system having two refrigerant flows that desirably have cooling or heating may benefit from these several designs.

For purposes of this application, the term "staggered" can be taken to mean there is a first flow passage of a first circuit and a first flow passage of a second circuit spaced perpendicular to the first flow passage of the first circuit in a direction perpendicular to a flow direction across the heat exchanger. Further, there is a second flow passage of the first flow circuit spaced on an opposed side of the first flow passage of the second circuit from the first flow passage of the first circuit, and a second flow passage of the second circuit spaced on an opposed side of the second flow passage of the first circuit relative to the first flow passage of the second circuit.

The staggered arrangement provides valuable benefits to increase efficiency. As an example, should one of the two circuits 26 or 28 be stopped, the entire air side heat transfer surface area of the heat exchanger will still be utilized to cool the other circuit. In addition, it is known that the heat exchange capacity for a particular heat exchanger is dependent on the temperature of the refrigerant entering the heat exchanger. Thus, the heat exchanger will cool the refrigerant at a higher inlet temperature to a greater extent than the second refrigerant at the lower temperature and thus the automatic allocation of air-side heat transfer surface area is achieved

Although an embodiment of this invention has been disclosed, a worker of ordinary skill in this art would recognize that certain modifications would come within the scope of this disclosure. For that reason, the following claims should be studied to determine the true scope and content of this invention.

## Claims

1. A refrigeration trailer having a transportation refrigeration system comprising:
an enclosure (20), and at least two compartments (22, 24) within said enclosure (20) to be conditioned to two distinct temperatures;
at least two refrigeration circuits (26, 28), with a refrigeration circuit associated with each of said at least two compartments (22, 24), and a first of said at least two refrigeration circuits (26, 28) including a first compressor (32), a first evaporator (30), and a first expansion valve (40), and a second of said at least two refrigeration circuits (28) including a second compressor (44), a second evaporator (42), and a second expansion valve (52); and **characterised by**
said first and second refrigeration circuits (26, 28) utilizing a common condenser (36), with first inlets (35) into said condenser (36) from said first circuit (26) connected to a first flow passage and second inlets (48) from said second circuit (28) connected to second flow passages, and first and second outlets (38, 50) connected to said first and second flow passages, and said first and second flow passages staggered in a direction perpendicular to a flow passage across said condenser (36)
wherein said condenser (36) is a round tube and plate fin heat exchanger;
wherein said round tube and plate heat exchanger has a dimension parallel to a flow path of refrigerant across said heat exchanger;
wherein said first and second inlets (35, 48) being at one end of said dimension, and said first and second outlets (38, 50) also being at said one end of said dimension, with said first and second flow passages passing across said dimension from said first and second inlets (35, 48), respectively, to a bend and then extending back across said dimension to said outlets (38, 50).

2. The refrigeration trailer as set forth in claim 1, wherein a first of said first flow passages and a first of said second flow passages spaced in a direction perpendicular to a flow direction across the heat exchanger, and a second of said first flow passages spaced on an opposed side of the first of the second flow passages from the first of the first flow passages, and a second of the second flow passages spaced on an opposed side of the second of the first flow passages relative to the first of the second flow passages.

## Patentansprüche

1. Kühlanhänger, der ein Transportkühlsystem aufweist, umfassend:
ein Gehäuse (20) und mindestens zwei Kammern (22, 24) innerhalb des Gehäuses (20), die auf zwei unterschiedliche Temperaturen zu klimatisieren sind;
mindestens zwei Kühlkreisläufe (26, 28), wobei ein Kühlkreislauf jeder der mindestens zwei Kammern (22, 24) zugeordnet ist, und wobei ein erster der mindestens zwei Kühlkreisläufe (26, 28) einen ersten Verdichter (32), einen ersten Verdampfer (30) und ein erstes Expansionsventil (40) beinhaltet und ein zweiter der mindestens zwei Kühlkreisläufe (28) einen zweiten Verdichter (44), einen zweiten Verdampfer (42) und ein zweites Expansionsventil (52) beinhaltet; und **dadurch gekennzeichnet, dass**
der erste und der zweite Kühlkreislauf (26, 28) einen gemeinsamen Kondensator (36) verwenden, wobei erste Einlässe (35) in den Kondensator (36) von dem ersten Kreislauf (26) mit einer ersten Strömungspassage verbunden sind und zweite Einlässe (48) von dem zweiten Kreislauf (28) mit zweiten Strömungspassagen verbunden sind, und erste und zweite Auslässe (38, 50) mit den ersten und zweiten Strömungspassagen verbunden sind, und die ersten und zweiten Strömungspassagen in einer Richtung senkrecht zu einer Strömungspassage über den Kondensator (36) versetzt sind,
wobei der Kondensator (36) ein Rundrohr- und Platten-LamellenWärmetauscher ist;
wobei der Rundrohr- und Plattenwärmetauscher eine Abmessung parallel zu einem Strömungsweg von Kältemittel über den Wärmetauscher aufweist;
wobei sich die ersten und die zweiten Einlässe (35, 48) an einem Ende der Abmessung befinden und sich die ersten und die zweiten Auslässe (38, 50) ebenfalls an dem einen Ende der Abmessung befinden, wobei die ersten und zweiten Strömungspassagen jeweils von den ersten bzw. den zweiten Einlässen (35, 48) über die Abmessung zu einer Biegung verlaufen und sich dann zurück über die Abmessung zu den Auslässen (38, 50) erstrecken.

2. Kühlanhänger nach Anspruch 1, wobei eine erste der ersten Strömungspassagen und eine erste der zweiten Strömungspassagen in einer Richtung senkrecht zu einer Strömungsrichtung über den Wärmetauscher beabstandet sind, und eine zweite der ersten Strömungspassagen auf einer gegenüberliegenden Seite der ersten der zweiten Strömungspassagen von der ersten der ersten Strömungspassagen beabstandet ist, und eine zweite der zweiten Strömungspassagen auf einer gegenüberliegenden Seite der zweiten der ersten Strömungspassagen relativ zu der ersten der zweiten Strömungspassagen beabstandet ist.

## Revendications

1. Remorque frigorifique ayant un système de réfrigération de transport comprenant :
une enceinte (20), et au moins deux compartiments (22, 24) à l'intérieur de ladite enceinte (20) à conditionner à deux températures distinctes ;
au moins deux circuits de réfrigération (26, 28), avec un circuit de réfrigération associé à chacun desdits au moins deux compartiments (22, 24), et un premier desdits au moins deux circuits de réfrigération (26, 28) comportant un premier compresseur (32), un premier évaporateur (30) et un premier détendeur (40), et un second desdits au moins deux circuits de réfrigération (28) comportant un second compresseur (44), un second évaporateur (42) et un second détendeur (52) ; et **caractérisé par**
lesdits premier et second circuits de réfrigération (26, 28) utilisant un condenseur commun (36), avec des premières entrées (35) dans ledit condenseur (36) depuis ledit premier circuit (26) connectées à un premier passage d'écoulement et des secondes entrées (48) depuis ledit second circuit (28) connectées aux seconds passages d'écoulement, et les première et seconde sorties (38, 50) connectées auxdits premier et seconds passages d'écoulement, et lesdits premier et second passages d'écoulement décalés dans une direction perpendiculaire à un passage d'écoulement à travers ledit condenseur (36)
dans lequel ledit condenseur (36) est un échangeur de chaleur à tubes ronds et à plaques-ailettes ;
dans lequel ledit échangeur de chaleur à tubes ronds et à plaques a une dimension parallèle à un trajet d'écoulement de réfrigérant à travers ledit échangeur de chaleur ;
dans lequel lesdites première et seconde entrées (35, 48) sont à une extrémité de ladite dimension, et lesdites première et seconde sorties (38, 50) sont également à ladite une extrémité de ladite dimension, avec lesdits premier et second passages d'écoulement traversant ladite dimension depuis lesdites première et seconde entrées (35, 48), respectivement, jusqu'à un coude et s'étendant ensuite à nouveau à travers ladite dimension jusqu'auxdites sorties (38, 50).

2. Remorque frigorifique selon la revendication 1, dans laquelle un premier desdits premiers passages d'écoulement et un premier desdits secondes passages d'écoulement espacés dans une direction perpendiculaire à une direction d'écoulement à travers l'échangeur de chaleur, et un second desdits premiers passages d'écoulement espacé sur un côté opposé du premier des seconds passages d'écoulement depuis le premier des premiers passages d'écoulement, et un second des seconds passages d'écoulement espacé sur un côté opposé du second des premiers passages d'écoulement par rapport au premier des seconds passages d'écoulement.
